# EUROPÄISCHE PATENTSCHRIFT

(11) **EP 1 248 272 B1**
(45) Veröffentlichungstag und Bekanntmachung des Hinweises auf die Patenterteilung: **12.02.2003**
(21) Anmeldenummer: 01107412.7
(22) Anmeldetag: 24.03.2001
(51) Int. Cl.: G21K 5/10, G01N 23/04

(54) **Verfahren zum Prüfen von Objekten, insbesondere zur Feststellung von Fehlern oder Unregelmässigkeiten in denselben mittels Röntgenstrahlung, sowie Vorrichtung zur Durchführung des Verfahrens**
Method for testing objects, in particular for X-ray detection of defects or irregularities, and apparatus for carrying out the method
Procédé d'inspection d'objets, notamment pour le dépistage de défauts ou d'irrégularités par rayons-x, et dispositif pour la mise en oeuvre du procédé

(43) Veröffentlichungstag der Anmeldung: 09.10.2002
(73) Patentinhaber: YXLON International X-Ray GmbH, 22419 Hamburg (DE)
(72) Erfinder: Bavendiek, Klaus, Dr., 22851 Norderstedt (DE); Bauer, Jürgen, 22081 Hamburg (DE)
(74) Vertreter: Schnekenbühl, Robert Matthias L.

(56) Entgegenhaltungen:
- EP-A- 0 959 344
- US-A- 5 297 361
- US-A- 5 459 770
- PATENT ABSTRACTS OF JAPAN vol. 1997, no. 08, 29. August 1997 (1997-08-29) & JP 09 110359 A (HITACHI BUILDING SYST CO LTD), 28. April 1997 (1997-04-28)

## Beschreibung

Die vorliegende Erfindung betrifft ein Verfahren zum Prüfen von Objekten, insbesondere zur Feststellung von Fehlern oder Unregelmäßigkeiten in denselben, bei dem das zu prüfende Objekt im Röntgenstrahl mit einem Manipulationssystem rotatorisch bewegt wird, und die Röntgenkomponenten, bestehend aus Röntgenröhre und Röntgendetektor, translatorisch bewegt werden, sowie eine Vorrichtung zur Durchführung des Verfahrens.

Ein derartiges Verfahren ist beispielsweise aus der EP 0 984 301 A1 zum Prüfen von Reisegepäck bekannt geworden. Schon in der dortigen Beschreibungseinleitung wird von den grundsätzlich verschiedenen Möglichkeiten gesprochen, um das Gepäckstück vollständig abzutasten.

Heutige Prüfsysteme zur Erkennung von Defekten in Gussteilen und dgl. mit Röntgenstrahlen arbeiten vom Grundsatz her nach zwei verschiedenen Prinzipien, entweder wird das Prüfteil im Röntgenstrahl bewegt oder die Röntgenkette, bestehend aus Röhre und Detektor, wird um das Teil herum bewegt. Bei der ersten Lösung sind die Röntgenkomponenten fest installiert; das Prüfteil wird meist von einem Roboter gegriffen und im Strahlengang bewegt. So können alle Positionen eines Teils inspiziert werden. Bei der zweiten Lösung liegt das Prüfteil still auf einem Fördersystem, z. B. einer Palette, und die Röntgenkomponenten, die an einem C-Arm oder O-Bogen befestigt sind, werden um das Prüfteil herum bewegt.

Bei der ersten Lösung bringt der Greifer Probleme, da er an mindestens einer Position im Bild ist und außerdem die Genauigkeit der Positionierung durch Verschleiß und Teile-Toleranzen einschränkt. Weiterhin sind die Kosten der Roboter im Verhältnis zur gesamten Anlage recht hoch.

Bei der zweiten Lösung wird eine sehr starke und damit schwere voluminöse Mechanik benötigt, um die Röntgenkomponenten in der kurzen zur Verfügung stehenden Zeit in Position zu bringen; weiterhin verursachen die starken Beschleunigungen Vibrationen, die Unschärfe in das Bild bringen und die Prüfgenauigkeit einschränken.

Der Erfindung liegt deshalb die Aufgabe zugrunde, das eingangs genannte Verfahren derart zu verbessern, daß es nicht nur kleinere Fehler zuverlässig erkennt, sondern gleichzeitig auch noch eine kürzere Prüfzeit bei möglichst geringer Baugröße erzielt. Letzteres bedeutet, daß die Mechanik schneller und mit höherer Präzision arbeiten muß.

Diese Aufgabe wird durch das Verfahren gemäß Anspruch 1 gelöst.

Diese Aufgabe wird in überraschender Weise erfindungsgemäß dadurch gelöst, daß die Röntgenkomponenten ausschließlich translatorisch bewegt werden und das Objekt oder Prüfteil ausschließlich in einer kardanischen Aufhängung rotatorisch bewegt wird. Mit anderen Worten: die Bewegung wird in rotatorische Prüfteilbewegung und translatorische Bewegung der Röntgenkomponenten aufgeteilt. Durch diese Aufteilung werden notwendige Bewegungen minimiert und insbesondere wird die Rotation großer Massen weit entfernt vom Schwerpunkt durch den Einsatz der kardanischen Aufhängungen vermieden. Erfindungsgemäß ist sichergestellt, daß ein Prüfteil im Strahlengang translatorisch in einer Ebene über die gesamte Prüfteilabmessung und rotatorisch in allen drei Achsen mit mindestens +/- 45° bewegt werden kann.

Bei dem Einsatz des Röntgen-Detektors kann sowohl ein flächenhafter Detektor, wie z.B. ein Bildverstärker oder ein Flachdetektor (amorphous Silicon Detektor), als auch ein Zeilendetektor eingesetzt werden. Erfindungsgemäß kann beim Einsatz des Zeilendetektors der Antrieb in die X- oder Z-Achse für den Vortrieb des Zeilendetektors zur flächenhaften Bildgenerierung genutzt werden.

Ebenso wird die Aufgabe durch die im Anspruch 6 gekennzeichnete Vorrichtung zur Durchführung des Verfahrens gemäß Anspruch 1 gelöst. Der Raumbedarf einer Röntgenprüfeinrichtung ist ein weiteres wichtiges Kriterium. Die gekennzeichnete Vorrichtung zur Durchführung des Verfahrens kommt mit optimal wenig Platz aus; gegenüber herkömmlichen Anlagen wird der Platzbedarf um ca. 50% reduziert.

Im folgenden werden mehrere bevorzugte Ausführungsformen der Erfindung näher erläutert, die zum besseren Verständnis der Erfindung beitragen sollen, auf die die Erfindung jedoch nicht beschränkt ist.

Es zeigt:
- Fig. 1: eine perspektivische Darstellung der erfindungsgemäßen Vorrichtung, bei der Teile weggebrochen sind, um den Innenaufbau zu zeigen,
- Fig. 2: eine perspektivische Darstellung der kardanischen Rahmen mit eingespannten Prüfobjekten,
- Fig. 3a-f: verschiedene schematische Ansichten, die die kardanische Aufhängung deutlich machen sollen,
- Fig. 4 u. 5: perspektivische Ansichten der in Fig. 1 gezeigten erfindungsgemäßen Vorrichtung, bei der Teile weggebrochen sind, um das Eingabetransportsystem darzustellen, mit unterschiedlichen Lagen der kardanischen Rahmen,
- Fig. 6: eine perspektivische Darstellung der in Fig. 1 gezeigten erfindungsgemäßen Vorrichtung, bei der Teile weggebrochen dargestellt sind, um den Einlauf- und Auslaufförderer besser aufzuzeigen,
- Fig. 7: eine perspektivische Ansicht der erfindungsgemäßen Vorrichtung, bei der Teile weggebrochen dargestellt sind, um den Einförderer darzustellen,
- Fig. 8a,b: perspektivische Darstellungen eines auf der Palette angeordneten bzw. befestigten Prüfteils,
- Fig. 9a-c: verschiedene schematische Darstellungen zur Anordnung des Prüfteils auf der Palette,
- Fig. 10a-c: verschiedene schematische Darstellungen zur einklemmenden Befestigung des Prüfteils auf der Palette,
- Fig. 11a-c: verschiedene schematische Darstellungen, analog zu den Figuren 9 und 10, die ein Raster zur Befestigung und zum Versetzen des Prüfteils auf der Palette zeigen.

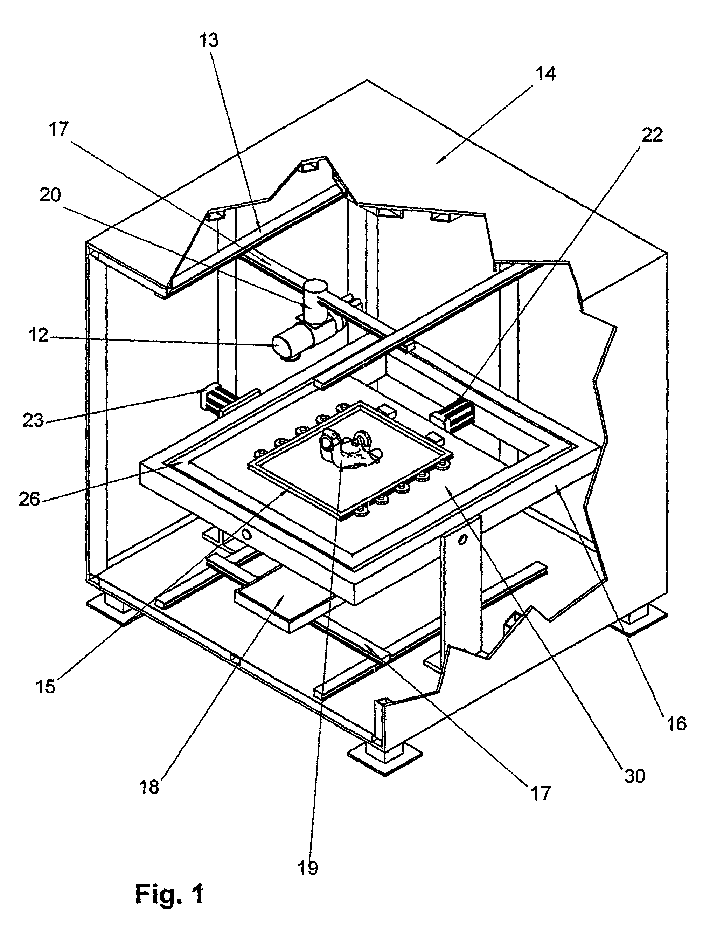

In Fig. 1 ist der prinzipielle Aufbau für eine erfindungsgemäße Vorrichtung gezeigt, mit der man das erfindungsgemäße Verfahren durchführen kann. Das Prüfsystem besteht generell aus den Komponenten Strahlenschutzkabine 14, Röntgenröhre 12, Röntgen-Detektor 18, Teileauflage/ Palette 30, Prüfteil 19 - in Fig. 1 ist beispielhaft ein Prüfteil auf einer Palette 15 gezeichnet, es sind auch mehrere Teile auf einer Palette denkbar - kardanischer Rahmen 16 und 26, Antriebe für die kardanischen Achsen in Schwerpunktnähe 22 und 23, translatorische Bewegungseinheit für die Röhre und Detektor in X- und Z-Richtung 17 und 13, sowohl am Boden als auch unter der Dekke. Der Ablauf der Prüfung ist wie folgt:

Die Teile werden in die Kabine eingefördert und der Strahlenschutz, z.B. eine Strahlenschutzkabinentür, geschlossen. Der Röntgenstrahl wird eingeschaltet und die erste Prüfposition für das erste Prüfteil angefahren. Dazu werden die Röhre und der Detektor in die passende Position gebracht (die Antriebe dieser translatorischen Achsen können gekoppelt sein, so dass der Strahl immer senkrecht in die Mitte des Detektors trifft). Gleichzeitig wird mit den beiden Antrieben 22 und 23 der Rahmen so gekippt, dass der richtige Durchstrahlungswinkel für das Prüfteil erreicht wird. Da die Teile wie später gezeigt auf der Palette fixiert sind, sind Winkel weit über 45 Grad möglich, ohne das die Teile verrutschen. Die beiden Rahmen sind so ausbalanciert, dass kaum Kräfte notwendig sind, um die jeweils erreichten Lagen zu halten. Mit dem Detektor wird das Bild aufgenommen und an einen Bildschirm bzw. Rechner zur Auswertung weitergeleitet. Danach werden parallel die Röhre und der Detektor zur nächsten Position verfahren und die beiden Rahmen in den richtigen Winkel gekippt. Anschließend wird das nächste Bild aufgenommen. Diese Prozedur wiederholt sich, bis das Teil bzw. alle Teile auf der Palette geprüft sind. Mit diesem Verfahren können die notwendigen Durchstrahlungswinkel erreicht und alle Positionen angefahren werden.

Um die Vergrößerung (Abstand Röhre zu Prüfteil sowie Abstand Prüfteil zu Detektor) einstellen zu können, kann optional eine manuelle oder automatische Verstellung 20 der Röhre in vertikale Richtung vorgesehen werden.

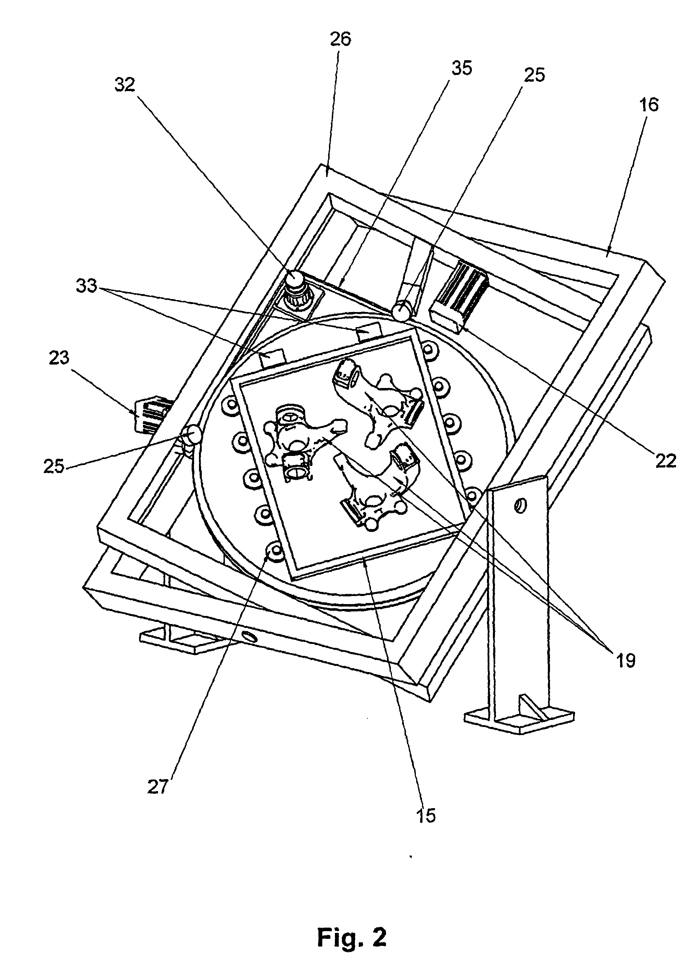

Die Prüfzeit kann durch Auflage von mehreren Prüfteilen auf einer Palette deutlich reduziert werden (die Ein- und Ausförderzeit wird auf mehrere Teile aufgeteilt). Wenn ein rotierender Teller zur Aufnahme der Palette eingesetzt wird, können mehrere identische Prüfteile mit gleichen Durchstrahlungsbildern auf einer Palette geprüft werden; gleichzeitig kann zusätzlich noch der Abstand des Prüfteils zu Röhre und Detektor dynamisch variiert werden. In Fig. 2 ist ein Ausführungsbeispiel mit beispielhaft drei identischen Prüfteilen 19 gezeigt. Dabei ist es von Bedeutung, dass keine zentrale Führung des Tellers gegeben ist, da eine solche zentrale Führung und ggf. die Antriebe im Röntgenstrahl liegen würden und die Durchstrahlungswinkel für die Prüfteile unzulässig einschränken. Der Drehteller in Fig. 2 ist an mindestens drei in diesem Fall um ca. 120 Grad versetzten Rollenpaaren 25 fixiert und wird über einen Riemen 35 vom Motor 32 angetrieben. Die Palette 15 mit den aufgelegten Prüfteilen 19 ist beispielhaft durch seitliche Führungsrollen 27 und zwei Elektro-Magnete 33 fixiert.

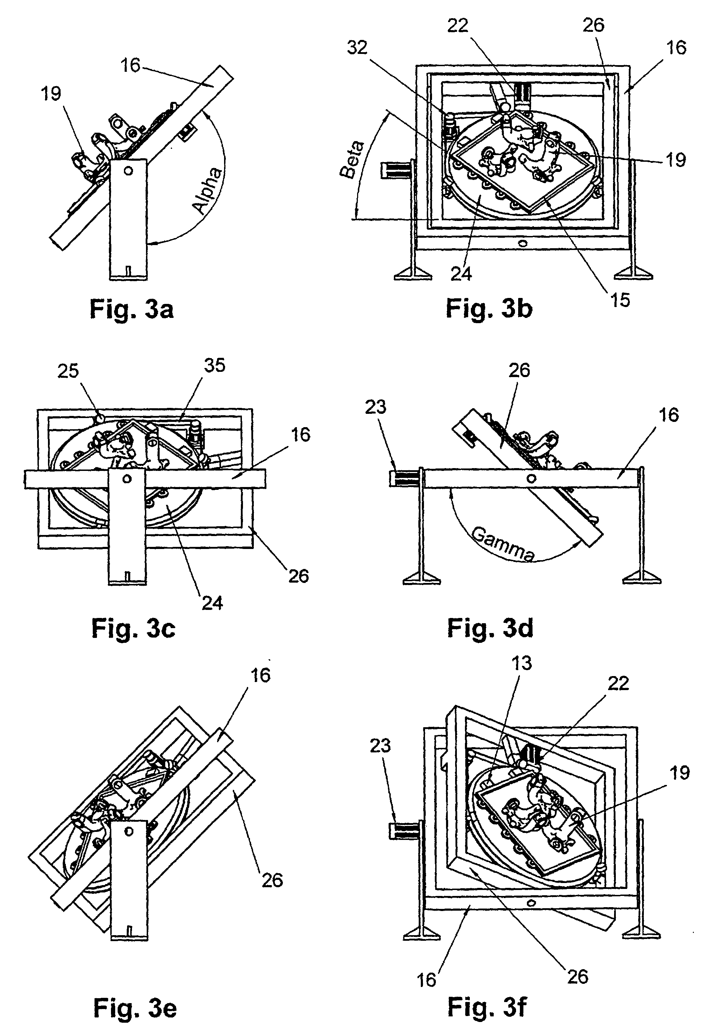

Die Fig. 3 zeigt die Kippung jeweils in eine Richtung um die beiden Achsen sowie die Drehmöglichkeiten von je zwei Seiten.

Die Ein- und Ausförderung läuft wie folgt ab:

Zur Prüfung müssen die Prüfteile auf Paletten 15 aufgelegt werden. Die Paletten können auf einem Transportsystem 10, 11 aktiv angetrieben oder unter Ausnutzung der Schwerkraft einund ausgefördert werden. Es können mehrere Paletten im System vorgesehen werden, damit die Beladung, der Transport vor die Kabine, die eigentliche Prüfung in der Kabine und die Entladung gleichzeitig stattfinden können.

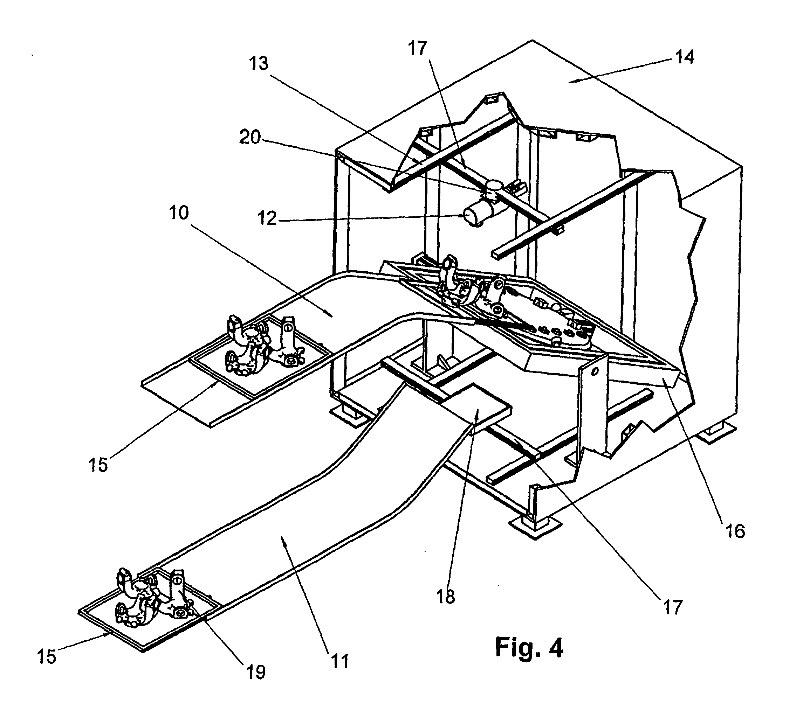

Zur Einförderung einer Palette in die Kabine wird der kardanische Rahmen 16 und der Drehteller 24 in die in Fig. 4 gezeigt Lage gebracht. Die Palette, die direkt vor der Kabine gewartet hat, wird entweder angetrieben oder durch die Schwerkraft bewegt auf den Drehteller in die Kabine eingefördert. Die genaue Endlage wird durch zwei oder mehrere Zentrierstifte sowie mindestens einen (hier zwei) Elektro-Magnete sichergestellt. An der Palette können PermanentMagneten den Elektro-Magneten gegenüberstehen, damit zur Ausförderung durch Umpolung des Elektro-Magneten eine Kraft aufgebracht werden kann.

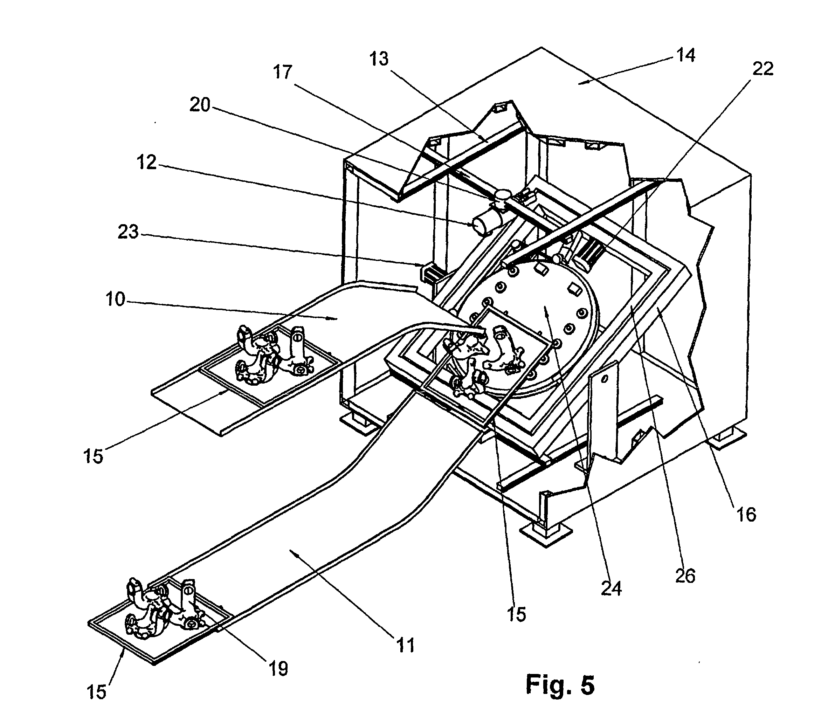

Zur Ausförderung wird der Rahmen und der Drehteller in die in Fig. 5 gezeigte Lage gebracht. Die Palette auf dem Drehteller wird durch die Umpolung des E-Magneten (Lösung der Fixierung und Beschleunigung) sowie durch Ausnutzung der Schwerkraft auf das untere Transport-System 11 gebracht und anschließend über das Transportsystem 11 zur Entladung der Palette abgefördert.

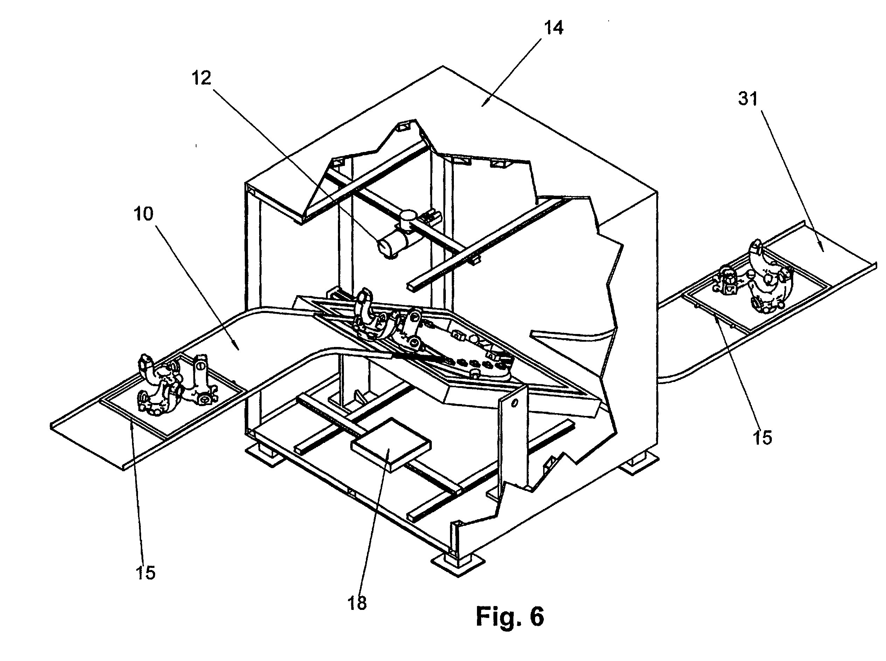

Bei einigen Anwendungen ist das Ein- und Ausfördern an der selben Seite unerwünscht und eine Durchförder-Anlage gefordert. Fig. 6 zeigt, wie das Verfahren auf Basis der vorangegangenen Anlage realisiert werden kann. Die Transporteinheit für die Ausförderung 31 ist jetzt an der zur Einförderung 10 gegenüberliegenden Seite angebracht. Zum Ausfördern wird die Palette so gedreht, dass das Herausfahren nach hinten unten möglich wird. Nach Verlassen des Drehtellers durch die Palette wird der Drehteller um 180 Grad gedreht und ist bereit zur Aufnahme der nächsten Palette von vorn.

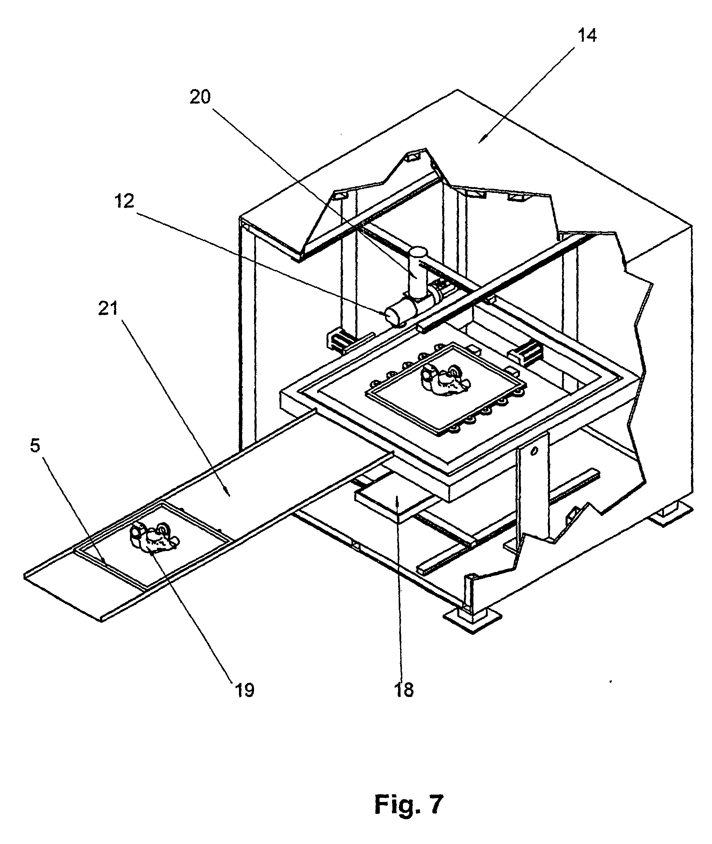

Wenn für die Ein- und Ausförderung auf die Ausnutzung der Schwerkraft verzichtet werden soll bzw. eine rein horizontale Förderung gefordert wird - z.B. wegen der Beladungshöhe der Paletten- , sind Lösungen denkbar, bei denen die Einund Ausförderung horizontal verläuft. Dabei müssen die Paletten 15 angetrieben werden bzw. verfügen über einen eigenen Antrieb. Ein Beispiel zeigt die Fig. 7 mit horizontaler Einfördereinheit 21.

Die Teile werden auf den Paletten wie folgt befestigt:

Um die Kippung der Rahmen ohne Auswirkung auf die Teileposition machen zu können, ist es notwendig, dass die Teile auf den Paletten sicher fixiert werden. Dazu gibt es zwei verschiedene Befestigungsmöglichkeiten.

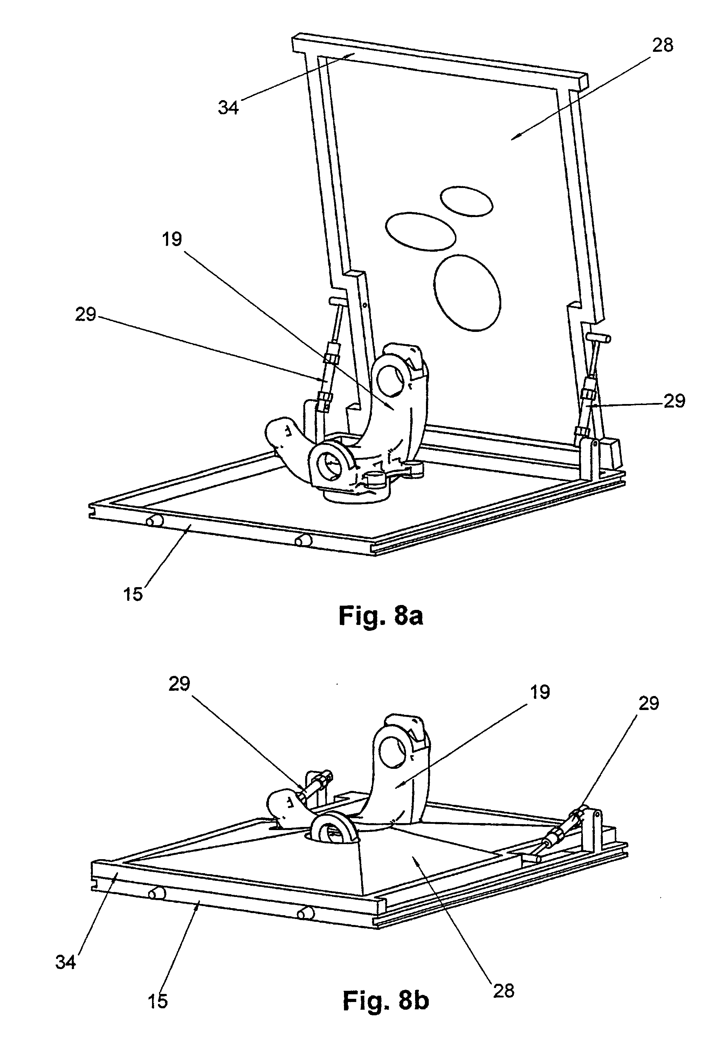

Bei der ersten Möglichkeit wird wie in Fig. 8 gezeigt ein Rahmen mit einer elastischen, aber stabilen Membran 28 über die Palette gezogen und hält das Teil 19 in seiner ordnungsgemäßen Position. Nach Auflegen der Prüfteile auf die Palette wird der Deckel 34 beim Einfördern automatisch geschlossen und mit einem Schloss arretiert (Prinzip der Heckklappe eines Autos). Optional kann der Drehpunkt des Feder-Dämpfer-Systems beim Verschließen höher liegen; dann wird durch ein Feder-Dämpfersystem 29 automatisch eine Kraft zum Herunterdrücken des Rahmens aufgebracht - eine separate Verriegelung kann dann entfallen. Beim Einfördern in die Kabine, während der Inspektion und beim Ausfördern bleibt die Abdeckung geschlossen. Nach der Ausförderung wird die Arretierung ausgelöst bzw. bei hochgelegtem Drehpunkt der Deckel über den Druckpunkt angehoben und der Deckel öffnet sich automatisch aufgrund der Federkraft des Gasdruckdämpfers 29. Nun können die Teile entnommen werden.

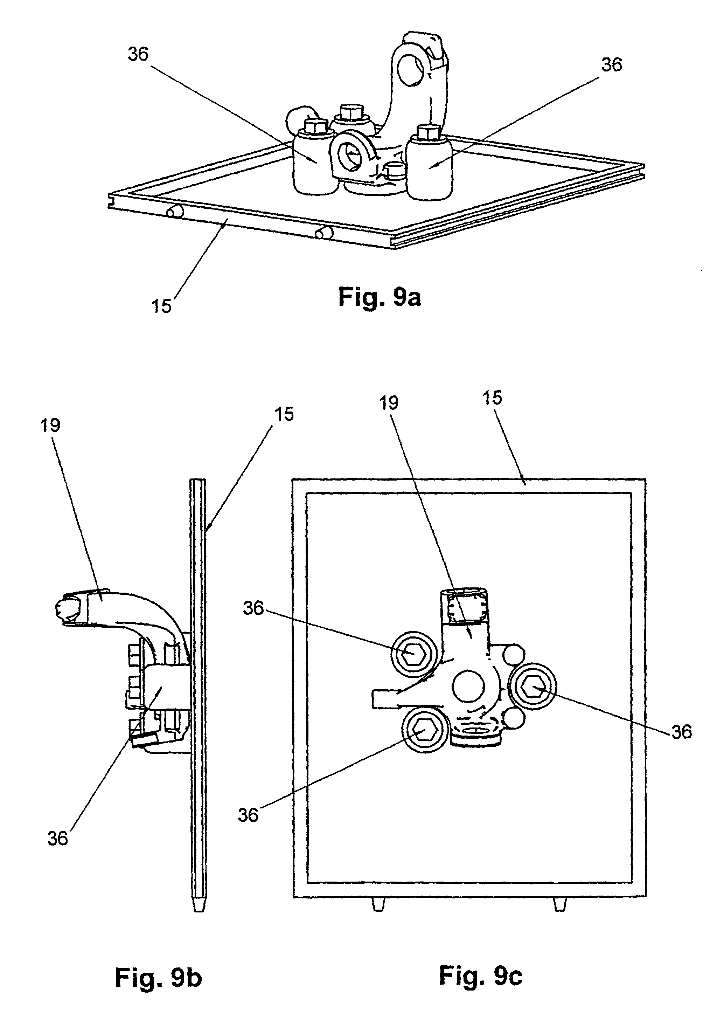

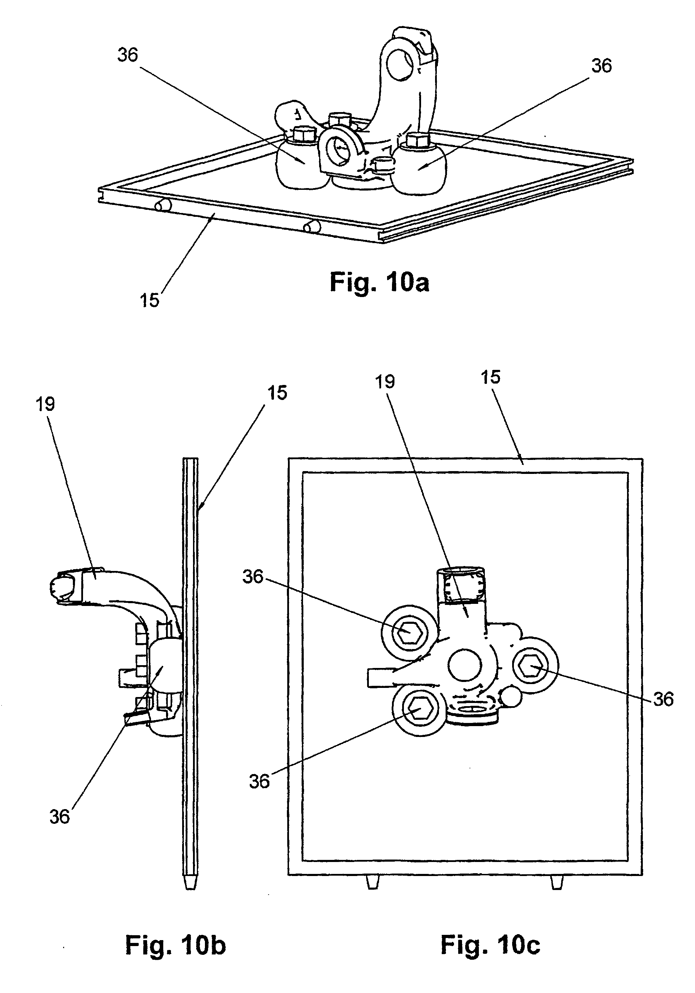

Die zweite Möglichkeit sieht wie in Fig. 9 gezeigt mehrere elastische, ggf. in Größe und Form unterschiedliche Befestigungspuffer 36 vor, die an geeigneten Stellen an der Kontur der Prüfteile 19 auf der Palette 15 aufgebracht sind. Sie sind so ausgeführt, dass durch Aufbringen einer Kraft die horizontale Ausdehnung zunehmen kann und damit das Teil eingeklemmt wird (siehe Fig. 10). Durch die vom Kugelschreiber-Prinzip bekannte Rasterung wird die Klemmung beibehalten, bis wiederum die Kraft aufgebracht wird und die Klemmung aufgelöst wird. Nun kann das Teil entnommen werden. Durch geeignete Anzahl und Position der Befestigungspuffer kann prinzipiell jedes Prüfteil geeignet fixiert werden. Dabei spielt es keine Rolle, ob nur ein oder gleich mehrere Teile auf einer Palette fixiert werden.

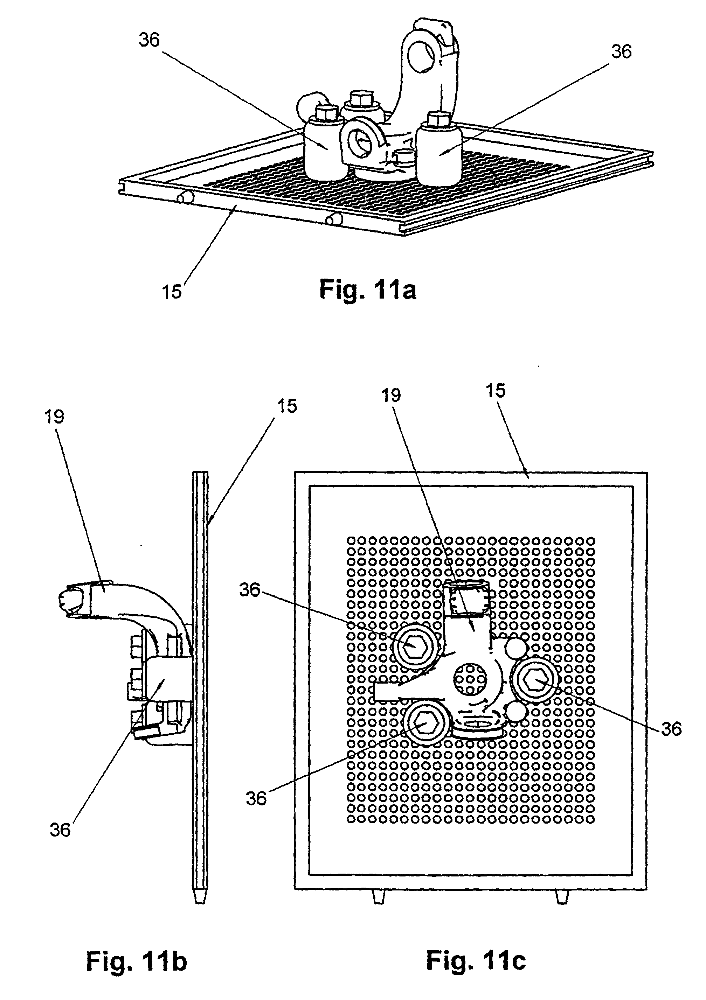

Bei der zweiten Lösung besteht zur Vereinfachung noch die Möglichkeit, Paletten mit einem festen Raster zu versehen und dort die Befestigungspuffer einzusetzen bzw. bei anderen Prüfteilen schnell zu versetzen. Die ist in Fig. 11 beispielhaft gezeigt.

## Patentansprüche

1. Verfahren zum Prüfen von Objekten, insbesondere zur Feststellung von Fehlern oder Unregelmäßigkeiten in denselben, mittels Röntgenstrahlung, bei dem das zu prüfende Objekt in verschiedene räumliche Positionen gebracht wird und dort während der Bilderfassung verharrt,
**dadurch gekennzeichnet, daß**
die Röntgenkomponenten, umfassend Röntgenröhre (12) und Röntgendetektor (18), ausschließlich translatorisch bewegt werden und das Objekt oder Prüfteil (19) in einer kardanischen Aufhängung rotatorisch in mindestens einer Achse, maximal in drei Achsen x, y und z bewegt wird.

2. Verfahren nach Anspruch 1, **dadurch gekennzeichnet, daß** die translatorische Bewegung der Röntgenröhre (12) mit der des Röntgendetektors (18) gekoppelt ist.

3. Verfahren nach Anspruch 2, **dadurch gekennzeichnet, daß** die Kopplung mechanisch oder programmgesteuert durchgeführt wird.

4. Verfahren nach Anspruch 1 bis 3, **dadurch gekennzeichnet, daß** die Röntgenröhre (12) zur Einstellung der Vergrößerung motorisch oder manuell vertikal verstellt wird.

5. Verfahren nach einem oder mehreren der vorstehenden Ansprüche 1 bis 4, **dadurch gekennzeichnet, daß** Paletten (15,30), die die Prüfteile (19) aufnehmen, an der gleichen oder der gegenüberliegenden Seite einer Strahlenschutzkabine (14) unter Ausnutzung der Schwerkraft und/oder motorisch ein- und/oder ausgefördert werden.

6. Vorrichtung zur Durchführung des Verfahrens zum Prüfen von Objekten nach einem oder mehreren der vorstehenden Ansprüche 1 bis 5, **dadurch gekennzeichnet, daß** die Röntgenröhre (12) über dem Prüfteil (19) mittels einer Aufhängung an einer translatorisch verlaufenden Schiene (17) befestigt ist, während der Röntgendetektor (18) unter dem Prüfteil (19) an einer translatorisch verlaufenden Schiene (17) befestigt ist, und daß das Prüfteil (19) auf einer oder mehreren Paletten (15,30) gelagert und befestigt ist, welche mit kardanischen Rahmen (16,26) zur Rotation des Prüfteils (19) in allen drei Achsen x, y und z verbunden sind.

7. Vorrichtung nach Anspruch 6, **dadurch gekennzeichnet, daß** die Palette (15) auf einem Drehteller (24) über Führungsrollen (27) und Elektromagneten (33) fixiert ist.

8. Vorrichtung nach Anspruch 6 oder 7, **dadurch gekennzeichnet, daß** die Paletten (15) vom Drehteller (24) mittels Permanentmagneten (33) befestigbar sind.

9. Vorrichtung nach einem oder mehreren der vorstehenden Ansprüche 6 bis 8, **dadurch gekennzeichnet, daß** die Prüfteile (19) auf der Palette (15) über elastische Klappdekkel mit Verschluß und/oder Gasdruckfeder (29) und/oder mittels einrastbaren elastischen Befestigungspuffern (36) nach dem Druckprinzip befestigt werden.

10. Vorrichtung nach einem oder mehreren der vorstehenden Ansprüche 6 bis 9, **dadurch gekennzeichnet, daß** die Paletten (15) ein Raster zur Aufnahme der Befestigungspuffer (36) aufweisen.

## Claims

1. Method of examining objects, in particular for identifying faults or irregularities in same, by means of X-radiation, in which the object to be examined is moved into various spatial positions and remains there while the picture is taken, **characterized in that** the X-ray components, comprising an X-ray tube (12) and X-ray detector (18), are moved exclusively translationally and the object or item for examination (19) is rotated in a gimbal suspension in at least one axis, at most in three axes x, y and z.

2. Method according to claim 1, **characterized in that** the translational movement of the X-ray tube (12) is coupled with that of the X-ray detector (18).

3. Method according to claim 2, **characterized in that** the coupling is carried out in a mechanical or program-controlled manner.

4. Method according to claims 1 to 3, **characterized in that** the X-ray tube (12) is vertically adjusted by motor or manually in order to set the magnification.

5. Method according to one or more of the above claims 1 to 4, **characterized in that** pallets (15,30) which house the items for examination (19) are conveyed inward and/or outward using the force of gravity and/or by motor on the same or the opposite side of a ray protection booth (14).

6. Device for carrying outs the method for examining objects according to one or more of the above claims 1 to 5, **characterized in that** the X-ray tube (12) above the item for examination (19) is secured by means of a suspension to a track (17) running translationally, while the X-ray detector (18) under the item for examination (19) is attached to a track (17) running translationally, and the item for examination (19) is housed and secured on one or more pallets (15,30) which are connected to gimbals (16,26) in order to rotate the item for examination (19) in all three axes x, y and z.

7. Device according to claim 6, **characterized in that** the pallet (15) is fixed on a turntable (24) via guide rollers (27) and electromagnets (33).

8. Device according to claim 6 or 7, **characterized in that** the pallets (15) of the turntable (24) can be attached by means of permanent magnets (33).

9. Device according to one or more of the above claims 6 to 8, **characterized in that** the items for examination (19) on the pallet (15) are attached via elastic folding covers with closure means and/or gas-pressure springs (29) and/or by means of lockable elastic securing buffers (36) according to the pressure principle.

10. Device according to one or more of the above claims 6 to 9, **characterized in that** the pallets (15) have a grid for housing the securing buffers (36).

## Revendications

1. Procédé d'inspection d'objets, notamment pour le dépistage de défauts ou d'irrégularités par rayons X, dans lequel l'objet à inspecter est placé selon différentes positions dans l'espace et maintenu immobile pendant l'acquisition d'image, **caractérisé en ce que** les composants radiographiques, comprenant un tube à rayons X (12) et un détecteur de rayons X (18), se déplacent exclusivement en translation et l'objet ou pièce test (19) se déplace en rotation, dans une suspension à la Cardan, autour d'un axe au moins et de trois axes x, y et z au plus.

2. Procédé selon la revendication 1, **caractérisé en ce que** le mouvement de translation du tube à rayons X (12) est couplé à celui du détecteur de rayons X (18).

3. Procédé selon la revendication 2, **caractérisé en ce que** le couplage est effectué mécaniquement ou commandé par programme.

4. Procédé selon les revendications 1 à 3, **caractérisé en ce que** le tube à rayons X (12) peut être déplacé verticalement de façon motorisée ou manuelle pour régler le grossissement.

5. Procédé selon l'une ou plusieurs des revendications précédentes 1 à 4, **caractérisé en ce que** les palettes (15, 30) qui reçoivent les pièces test (19) sont extraites et/ou introduites par le même côté d'une cabine de protection anti-rayonnement (14) ou par des côtés opposés en utilisant la gravité et/ou un moteur.

6. Dispositif de mise en oeuvre du procédé d'inspection d'objets selon l'une ou plusieurs des revendications précédentes 1 à 5, **caractérisé en ce que** le tube à rayons X (12) est fixé au-dessus de la pièce test (19) par suspension à un rail de translation (17), tandis que le détecteur de rayons X (18) est fixé en dessous de la pièce test (19) sur un rail de translation (17), et **en ce que** la pièce test (19) est placée et fixée sur une ou plusieurs palettes (15, 30) qui sont reliées à un système de cadres à la Cardan (16, 26) permettant d'entraîner en rotation la pièce test (19) autour des trois axes x, y et z.

7. Dispositif selon la revendication 6, **caractérisé en ce que** la palette (15) est fixée sur un plateau tournant (24) par l'intermédiaire de galets de guidage (27) et d'électro-aimants (33).

8. Dispositif selon la revendication 6 ou la revendication 7, **caractérisé en ce que** les palettes (15) peuvent être fixées au plateau tournant (24) par des aimants permanents (33).

9. Dispositif selon l'une ou plusieurs des revendications précédentes 6 à 8, **caractérisé en ce que** les pièces test (19) sont fixées sur la palette (15) par des couvercles rabattants élastiques à dispositif de fermeture et/ou ressort à gaz comprimé (29) et/ou selon le principe de pression au moyen de butées de fixation (36) élastiques encliquetables.

10. Dispositif selon l'une ou plusieurs des revendications précédentes 6 à 9, **caractérisé en ce que** les palettes (15) présentent une grille pour recevoir les butées de fixation (36).
